# EUROPÄISCHE PATENTSCHRIFT

(11) **EP 0 784 636 B1**
(45) Veröffentlichungstag und Bekanntmachung des Hinweises auf die Patenterteilung: **02.12.1998**
(21) Anmeldenummer: 95934108.2
(22) Anmeldetag: 23.09.1995
(51) Int. Cl.: C08F 6/22, C08F 2/32

(54) **AGGLOMERIERTE POLYMERTEILCHEN AUS FEINTEILIGEN, WASSERLÖSLICHEN ODER WASSERQUELLBAREN AMMONIUMCARBOXYLATGRUPPEN ENTHALTENDEN POLYMERISATEN**
AGGLOMERATED PARTICLES OF FINELY DIVIDED POLYMERS WHICH ARE WATER-SOLUBLE OR CAPABLE OF SWELLING IN WATER AND CONTAIN AMMONIUM CARBOXYLATE GROUPS
PARTICULES DE POLYMERES AGGLOMEREES CONSTITUEES DE POLYMERISATS FINEMENT DIVISES, RENFERMANT DES GROUPES CARBOXYLATE D'AMMONIUM, SOLUBLES DANS L'EAU OU SUSCEPTIBLES DE GONFLEMENT DANS L'EAU

(30) Priorität: 04.10.1994 DE 4435425
(43) Veröffentlichungstag der Anmeldung: 23.07.1997
(73) Patentinhaber: BASF AKTIENGESELLSCHAFT, 67056 Ludwigshafen (DE)
(72) Erfinder: RÜBENACKER, Martin, D-67122 Altrip (DE); SCHNEIDER, Reinhard, D-67136 Fussgönheim (DE); NIEBERLE, Jürgen, D-67157 Wachenheim (DE); HARTMANN, Heinrich, D-67117 Limburgerhof (DE); DENZINGER, Walter, D-67346 Speyer (DE); KISTENMACHER, Axel, D-67061 Ludwigshafen (DE)
(86) Internationale Anmeldenummer: EP9503772
(87) Internationale Veröffentlichungsnummer: WO9610589

(56) Entgegenhaltungen:
- EP-A- 0 412 388
- US-A- 4 777 231

## Beschreibung

Die Erfindung betrifft agglomerierte Polymerteilchen aus feinteiligen, wasserlöslichen oder wasserquellbaren Ammoniumcarboxylatgruppen enthaltenden Polymerisaten, die mindestens 50 Gew.-% einer monoethylenisch ungesättigten Carbonsäure einpolymerisiert enthalten, wobei die agglomerierten Teilchen einen mittleren Teilchendurchmesser von 20 bis 2500 µm haben und aus Primärteilchen mit einem mittleren Teilchendurchmesser von 0,1 bis 15 µm bestehen, die durch Polymerisieren von Monomermischungen aus mindestens 50 Gew.-% einer monoethylenisch ungesättigten Carbonsäure, gegebenenfalls in Gegenwart von anderen Monomeren und von Vernetzungsmitteln, nach Art einer Wasser-in-Öl-Polymerisation erhältlich sind und durch azeotropes Entwässern der die Primärteilchen enthaltenden Wasser-in-Öl-Polymeremulsion in Gegenwart von agglomerierend wirkenden Polyalkylenglykolen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten,
herstellbar sind und wobei die agglomerierten Polymerteilchen beim Eintragen in ein wäßriges Medium in die Primärteilchen zerfallen, Verfahren zur Herstellung der agglomerierten Polymerteilchen durch azeotropes Entwässern von Wasser-in-Öl-Polymeremulsionen von wasserlöslichen oder wasserquellbaren Ammoniumcarboxylatgruppen enthaltenden Polymeren, die einen mittleren Teilchendurchmesser von 0,1 bis 15 µm haben, in Gegenwart von 0,1 bis 40 Gew.-%, bezogen auf die Polymeren an agglomerierend wirkenden Polyalkylenglykolen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten,
und Isolieren der Teilchen und Verwendung der agglomerierten Polymerteilchen als Verdickungsmittel für Pigmentdruckpasten.

Aus der GB-A-1 319 632 ist ein Verfahren zur Herstellung von granulatförmigen Polymerisaten bekannt, bei dem man zunächst eine Wasser-in-Öl-Emulsion eines wasserlöslichen Monomeren in einem organischen Lösemittel herstellt, wobei die Emulsion Ethylcellulose oder Polyvinylacetat und ein wasserlösliches Emulgiermittel aus einem Kondensationsprodukt von Ethylenoxid oder Propylenoxid und Alkoholen, Aminen, Amiden, Fettsäuren oder Phenolen enthält. Die Wasser-in-Öl-Emulsion wird anschließend in Gegenwart von Initiatoren polymerisiert und danach durch azeotrope Destillation entwässert. Das granulatförmige Polymer wird abfiltriert. Es hat eine Teilchengröße von ca. 1 bis 6 mm. Solche grobteiligen Polymerisate lösen sich nur sehr langsam in Wasser.

Aus der WO-A-92/13912 sind agglomerierte Polymerteilchen aus wasserlöslichen oder wasserquellbaren Polymerisaten mit einem mittleren Teilchendurchmesser von 20 bis 5000 µm bekannt. Die agglomerierten Polymerteilchen bestehen aus Primärteilchen mit einem mittleren Teilchendurchmesser von 0,1 bis 15 µm und werden durch Polymerisieren von wasserlöslichen Monomeren, gegebenenfalls in Gegenwart von Vernetzungsmitteln nach Art einer Wasser-in-Öl-Polymerisation und anschließendes azeotropes Entwässern der die Primärteilchen enthaltenden Wasser-in-Öl-Polymeremulsion in Gegenwart von agglomerierend wirkenden Polyalkylenglykolen hergestellt, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten.

Die agglomerierten Polymerteilchen zerfallen beim Eintragen in ein wäßriges Medium in die Primärteilchen. Bei der azeotropen Entwässerung von Polymerisaten, die Ammoniumcarboxylatgruppen enthalten, treten jedoch Schwierigkeiten auf, weil je nach Dauer der Auskreisung verschiedene Mengen Ammoniak mitverdampfen, was zu einem nicht reproduzierbaren Hydrolysegrad des Polymeren führt. Dadurch legt sich das Polymer quantitativ an die Kesselwand des Auskreiskessels, bis der Rührer steckenbleibt.

Darüber hinaus ist es schwierig, die Teilchengröße der agglomerierten Polymerisate gezielt einzustellen.

Der vorliegenden Erfindung liegt daher die Aufgabe zugrunde, agglomerierte Polymerteilchen aus feinteiligen, wasserlöslichen oder wasserquellbaren Ammoniumcarboxylatgruppen enthaltenden Polymerisaten und ein Verfahren zu ihrer Herstellung zur Verfügung zu stellen. Die Polymerisate sollen eine enge Teilchengrößenverteilung aufweisen, wobei das Maximum der Teilchengrößenverteilung durch Änderung der Verfahrensbedingungen bei der Herstellung leicht variiert werden kann.

Die Aufgabe wird erfindungsgemäß gelöst mit agglomerierten Polymerteilchen aus feinteiligen, wasserlöslichen oder wasserquellbaren Ammoniumcarboxylatgruppen enthaltenden Polymerisaten, die mindestens 50 Gew.-% einer monoethylenisch ungesättigten Carbonsäure einpolymerisiert enthalten, wobei die agglomerierten Polymerteilchen einen mittleren Teilchendurchmesser von 20 bis 2500 µm haben und aus Primärteilchen mit einem mittleren Teilchendurchmesser von 0,1 bis 15 µm bestehen, die durch Polymerisieren von Monomermischungen aus mindestens 50 Gew.-% monoethylenisch ungesättigten Carbonsäuren, gegebenenfalls in Gegenwart von anderen monoethylenisch ungesättigten Monomeren und Vernetzungsmitteln, nach Art einer Wasser-in-Öl-Polymerisation erhältlich sind und durch azeotropes Entwässern zu mindestens 70 % der die Primärteilchen enthaltenden Wasser-in-Öl-Polymeremulsion in Gegenwart von agglomerierend wirkenden Polyalkylenglykolen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten,
herstellbar sind und wobei die agglomerierten Polymerteilchen beim Eintragen in ein wäßriges Medium in die Primärteilchen zerfallen, wenn das azeotrope Entwässern zusätzlich in Gegenwart von 0,1 bis 20 Gew.-%, bezogen auf die Polymeren, an Schutzkolloiden durchgeführt wird, die durch radikalische Copolymerisation von
a) C₈- bis C₄₀-Monoolefinen mit
b) monoethylenisch ungesättigten C₄- bis C₆-Dicarbonsäureanhydriden
nach Art einer Substanzpolymerisation bei Temperaturen von 80 bis 300°C zu Copolymerisaten mit Molmassen von 500 bis 20.000 g/mol und einem Gehalt an einpolymerisierten Monoolefinen von 40 bis 60 mol-% und einem Gehalt an einpolymerisierten monoethylenisch ungesättigten Dicarbonsäuren von 60 bis 40 mol-% erhältlich sind und wobei die Anhydridgruppen enthaltenden Copolymerisate zu Säuregruppen enthaltenden Copolymerisaten hydrolysiert oder durch Umsetzung mit Alkoholen, Alkalimetallbasen, Ammoniak oder Aminen modifiziert sein können.

Gegenstand der Erfindung ist außerdem ein Verfahren zur Herstellung der oben beschriebenen agglomerierten Polymerteilchen durch azeotropes Entwässern zu mindestens 70 % von Wasser-in-Öl-Polymeremulsionen von wasserlöslichen oder wasserquellbaren Ammoniumcarboxylatgruppen enthaltenden Polymeren, die einen mittleren Teilchendurchmesser von 0,1 bis 15 µm haben, in Gegenwart von 0,1 bis 40 Gew.-%, bezogen auf die Polymerisate, an agglomerierend wirkenden Polyalkylenglykolen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten
und Isolieren der Teilchen, wenn man das azeotrope Entwässern zusätzlich in Gegenwart von 0,1 bis 20 Gew.-%, bezogen auf die Polymeren, an Schutzkolloiden durchführt, die durch radikalische Copolymerisation von
a) C₈- bis C₄₀-Monoolefinen mit
b) monoethylenisch ungesättigten C₄- bis C₆-Dicarbonsäureanhydriden
nach Art einer Substanzpolymerisation bei Temperaturen von 80 bis 300°C zu Copolymerisaten mit Molmassen von 500 bis 20.000 g/mol und einem Gehalt an einpolymerisierten Monoolefinen von 40 bis 60 mol-% und einem Gehalt an einpolymerisierten monoethylenisch ungesättigten Dicarbonäuren von 60 bis 40 mol-% erhältlich sind und wobei die Anhydridgruppen enthaltenden Copolymerisate zu Säuregruppen enthaltenden Copolymerisaten hydrolysiert oder durch Umsetzung mit Alkoholen, Alkalimetallbasen, Ammoniak oder Aminen modifiziert sein können.

Um die erfindungsgemäßen agglomerierten Polymerteilchen zu erhalten, kann man entweder zunächst Monomermischungen, die mindestens 50 Gew.-% einer monoethylenisch ungesättigten Carbonsäure und gegebenenfalls andere monoethylenisch ungesättigte Monomere und gegebenenfalls Vernetzer enthalten, wobei die Carbonsäuren gegebenenfalls in partiell oder vollständig mit Ammoniak neutralisierter Form vorliegen, nach dem bekannten Verfahren der Wasser-in-Öl-Polymerisation polymerisieren oder falls solche Wasser-in-Öl-Polymeremulsionen verfügbar sind, direkt davon ausgehen und die Emulsionen in Gegenwart der agglomerierend wirkenden Polyalkylenglykole und den erfindungsgemäß einzusetzenden Schutzkolloiden azeotrop entwässern. Falls man bei der Polymerisation die freien Carbonsäuren einsetzt, erfolgt eine zumindest partielle Neutralisation mit Ammoniak oder Aminen der Copolymerisate vor der azeotropen Entwässerung.

Als Monomere kommen wasserlösliche monoethylenisch ungesättigte Carbonsäuren in Betracht. Sie können in Form der freien Säuren oder vorzugsweise in mit Ammoniak oder Aminen partiell oder vollständig neutralisierter Form eingesetzt werden. Beispiele für diese Monomeren sind monoethylenisch ungesättigte C₃- bis C₆-Carbonsäuren, wie Acrylsäure, Methacrylsäure, Itaconsäure, Maleinsäure, Fumarsäure und Ethacrylsäure. Vorzugsweise verwendet man aus dieser Gruppe von Monomeren Acrylsäure, Methacrylsäure oder Mischungen aus Acrylsäure und Methacrylsäure in beliebigem Verhältnis. Die zuletzt genannten Monomeren werden vorzugsweise mit Methylenbisacrylamid als Vernetzer bei der Polymerisation eingesetzt, wobei die Carbonsäuren gegebenenfalls in partiell oder vollständig mit Ammoniak neutralisierter Form vorliegen. Die Neutralisation der Monomeren erfolgt vorzugsweise in wäßrigem Medium mit Ammoniak oder Aminen wie Methylamin, Ethylamin, n-Propylamin, Isopropylamin, Butylamin, Morpholin, Monoethanolamin, Diethanolamin oder Triethanolamin.

Die monoethylenisch ungesättigten Carbonsäuren können entweder allein oder in Mischung mit anderen monoethylenisch ungesättigten Monomeren zu wasserlöslichen Copolymeren copolymerisiert werden. Solche Monomermischungen enthalten mindestens 50 Gew.-% einer monoethylenisch ungesättigten Carbonsäure. Geeignete andere monoethylenisch ungesättigte Monomere sind wasserlösliche Monomere wie Acrylamid, Methacrylamid, Acrylnitril, Methacrylnitril, Acrylamidomethylpropansulfonsäure, Vinylsulfonsäure, Vinylphosphonsäure, Vinylmilchsäure, N-Vinylpyrrolidon, Vinylimidazol, 2-Vinylimidazol, N-Vinylformamid, Hydroxyethylacrylat, Hydroxypropylacrylat, Hydroxyethylmethacrylat, Hydroxypropylmethacrylat, N-Methylolacrylamid und N-Methylolmethacrylamid. Weitere geeignete monoethylenisch ungesättigte Monomere, die gegebenenfalls mit den monoethylenisch ungesättigten Carbonsäuren zu wasserlöslichen Copolymerisaten copolymerisiert werden können, sind in der WO-A-92/13912 beschrieben. Die anderen monoethylenisch ungesättigten Monomeren werden vorzugsweise in Mengen bis zu 50 Gew.-% in der Monomermischung eingesetzt. Man kann die monoethylenisch ungesättigten Carbonsäuren gegebenenfalls auch mit wasserunlöslichen Monomeren copolymerisieren, wobei man die wasserunlöslichen Monomeren dann in einer solchen Menge einsetzt, daß die entstehenden Copolymerisate noch in Wasser löslich sind, bzw. daß die Copolymerisate in Form der Ammoniumsalze in Wasser löslich sind. Wasserunlösliche Monomere sind beispielsweise Vinylacetat, Vinylpropionat, Vinylbutyrat, C₁- bis C₁₈-Alkylester von monoethylenisch ungesättigten C₃- bis C₆-Carbonsäuren, z.B. Methylacrylat, Ethylacrylat, Octylacrylat, Palmitylacrylat, Stearylacrylat, Methylmethacrylat, Ethylmethacrylat und Palmitylmethacrylat. Bei der Copolymerisation setzt man vorzugsweise als wasserlösliche Monomere Mischungen aus Acrylsäure und Acrylamid und/oder Methacrylamid oder Mischungen aus Methacrylsäure und Acrylamid und/oder Methacrylamid und als Vernetzer Methylenbisacrylamid ein.

Um wasserquellbare Polymerisate herzustellen, polymerisiert man die oben genannten Monomeren in Gegenwart von Vernetzungsmitteln. Bekannte Vernetzer sind Verbindungen, die mindestens zwei ethylenisch ungesättigte nicht-konjugierte Doppelbindungen im Molekül enthalten.

Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 106 bis 8.500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Vernetzer werden beispielsweise in einer Menge von 50 bis 5000 ppm entsprechend etwa 0,003 bis 0,3 mol-%, bezogen auf die bei der Polymerisation eingesetzten Monomeren, verwendet.

Um die Monomeren zu polymerisieren, löst man sie zunächst in Wasser. Die Konzentration der Monomeren in der wäßrigen Lösung beträgt z.B. 20 bis 80, vorzugsweise 30 bis 60 Gew.-%. Die wäßrige Lösung wird dann unter Bildung einer Wasser-in-Öl-Emulsion in einer inerten hydrophoben Flüssigkeit (Ölphase) in Gegenwart mindestens eines Wasser-in-Öl-Emulgators emulgiert. Als inerte hydrophobe Flüssigkeiten können praktisch alle mit Wasser nicht mischbaren Flüssigkeiten verwendet werden, die nicht in die Polymerisation eingreifen. Vorzugsweise verwendet man hierfür aliphatische und aromatische Kohlenwasserstoffe oder Mischungen aus aliphatischen und aromatischen Kohlenwasserstoffen. Geeignete aliphatische Kohlenwasserstoffe sind beispielsweise Pentan, Hexan, Heptan, Octan, Nonan, Decan, Cyclohexan, Methylcyclohexan, Decalin, Isooctan und Ethylcyclohexan. Aromatische Kohlenwasserstoffe, die als hydrophobe Flüssigkeit bei der umgekehrten Suspensionspolymerisation verwendet werden, sind beispielsweise Benzol, Toluol, Xylol und Isopropylbenzol. Daneben ist es selbstverständlich auch möglich, halogenierte Kohlenwasserstoffe, wie Tetrachlorethan, Hexachlorethan, Trichlorethan und Chlorbenzol zu verwenden. Vorzugsweise verwendet man Cyclohexan, Methylcyclohexan oder Kohlenwasserstoffe eines Siedebereiches von 60 bis 170°C. Der Anteil der Ölphase am Aufbau der Wasser-in-Öl-Polymeremulsion beträgt 15 bis 70, vorzugsweise 20 bis 60 Gew.-%.

Um die wäßrige Monomerlösung in der Ölphase zu dispergieren, verwendet man die dafür bekannten Wasser-in-Öl-Emulgatoren. Hierbei handelt es sich beispielsweise um Sorbitanester, wie Sorbitanmonostearat, Sorbitanmonooleat, Sorbitanpalmitat und Sorbitanlaurat sowie um Glycerinester, deren Säurekomponente sich von C₁₄- bis C₂₀-Carbonsäuren ableitet. Weitere geeignete Emulgatoren sind die aus der DE-B-25 57 324 bekannten Wasser-in-Öl-Emulgatoren, die erhältlich sind durch Umsetzung von
A) C₁₀- bis C₂₂-Fettalkoholen mit Epichlorhydrin im Molverhältnis 1:0,5 bis 1:1,5 zu Glycidylethern,
B) Reaktion der Glycidylether mit (1) gesättigten, 2 bis 6 OH-Gruppen enthaltenden C₂- bis C₆-Alkoholen oder (2) deren Monoether mit C₁₀- bis C₂₂-Fettalkoholen, im Molverhältnis Glycidylether zu (1) oder (2) von 1:0,5 bis 1:6 in Gegenwart von Säuren oder Basen und
C) Alkoxylierung der Reaktionsprodukte gemäß (B) mit mindestens einem C₂- bis C₄-Alkylenoxid im Molverhältnis 1:1 bis 1:6.

Die in Betracht kommenden Wasser-in-Öl-Emulgatoren haben einen HLB-Wert von höchstens 8. Unter HLB-Wert versteht man die hydrophile-lipophile Balance des Emulgators, vgl. W.C. Griffin, J. Soc. Cosmet. Chem. Band 1, 411 (1949). Die wasser-in-öl-Emulgatoren werden, bezogen auf die eingesetzten Monomeren, in einer Menge von 2 bis 20, vorzugsweise 5 bis 15 Gew.-% eingesetzt. Vorzugsweise werden diejenigen Wasser-in-Öl-Emulgatoren eingesetzt, die in der genannten DE-B-2 557 324 beschrieben sind.

Als geeignete Radikale bildende Polymerisationsinitiatoren können sämtliche üblicherweise eingesetzte Polymerisationsinitiatoren verwendet werden. Bevorzugt sind wasserlösliche Initiatoren, wie Alkali- oder Ammoniumperoxidisulfate, Wasserstoffperoxid, Diacetylperoxidicarbonat, Dicyclohexylperoxidicarbonat, tert.-Butylperpivalat, Dilauroylperoxid, Dibenzoylperoxid, tert.-Butyl-per-2-ethylhexanoat, tert.-Butylpermaleinat, Bis-(tert.-butyl-peroxid)-cyclohexan, tert.-Butylperacetat, Dicumylperoxid, Di-tert.-amylperoxid, Di-tert.-butylperoxid, Cumylhydroperoxid, tert.-Butylhydroperoxid und p-Menthanhydroperoxid sowie Azoinitiatoren, wie 2,2'-Azobis(2-methyl-N-phenylpropionamidin)-dihydrochlorid, 2,2'-Azobis(2-methylpropionamidin)dihydrochlorid, 2,2'-Azobis(2,4-dimethylvaleronitril), 2,2'-Azobis-(iso-butyronitril), 2,2'-Azobis(2-amidinopropan)dihydrochlorid und 2,2'-Azobis-[2-(2-imidazolin-2-yl)propan]-dihydrochlorid. Bevorzugte Initiatoren sind Alkali- und Ammoniumpersulfate, tert.-Butylperpivalat, tert.-Butylper-2-ethylhexanoat, 2,2'-Azo-bis-(2,4-dimethylvaleronitril), 2,2'-Azobis(2-amidinopropan)dihydrochlorid, Azobis-(isobutyronitril) und 2,2'-Azo-bis[2(2-imidazolin-2-yl)-propan]dihydrochlorid. Man kann entweder einen einzigen Initiator oder auch Mischungen mehrerer Initiatoren verwenden. Die Auswahl der Initiatoren richtet sich in erster Linie nach der Temperatur, bei der die Polymerisation durchgeführt wird. Man kann auch zusätzlich Salze von Schwermetallen, z.B. Kupfer-, Kobalt-, Mangan-, Eisen-, Nickel- und Chromsalze und/oder organische Verbindungen, wie Benzoin, Dimethylanilin, Ascorbinsäure sowie Reduktionsmittel, wie beispielsweise Alkalidisulfit oder Formaldehydnatriumsulfoxylat zusammen mit mindestens einem der oben angegebenen Radikale bildenden Polymerisationsinitiatoren einsetzen. Solche Mischungen von Initiatoren ermöglichen das Polymerisieren bei niedrigeren Temperaturen. Die reduzierende Komponente von sogenannten Redox-Initiatoren kann beispielsweise von Natriumsulfit, Natriumbisulfit, Natriumformaldehydsulfoxylat oder Hydrazin gebildet werden. Bezogen auf die bei der Polymerisation eingesetzten Monomeren benötigt man z.B. 100 bis 10.000, vorzugsweise 100 bis 2000 ppm eines Polymerisationsinitiators oder einer Mischung mehrerer Polymerisationsinitiatoren. Die angegebenen Initiatormengen entsprechen etwa 0,003 bis 0,3 mol-% Initiator, bezogen auf die eingesetzten Monomeren.

Die Polymerisation der wasserlöslichen Monomeren wird zusätzlich in Gegenwart mindestens eines Öl-in-Wasser-Emulgators durchgeführt. Der Einsatz dieser Gruppe von Emulgatoren ermöglicht die Herstellung besonders feinteiliger und sedimentationsstabiler Wasser-in-Öl-Polymeremulsionen. Die mittlere Teilchengröße solcher Polymeremulsionen liegt in dem Bereich von z.B. 0,1 bis 15 µm, bestimmt durch Fraunhofer-Beugung, vgl. H.G. Barth, Modern Methods of Partial Size Analysis, John Wiley & Sons, New York, 1984. Geeignete Öl-in-Wasser-Emulgatoren sind beispielsweise sämtliche Netzmittel, die einen HLB-Wert von mindestens 10 haben. Bei dieser Gruppe von Emulgatoren handelt es sich im wesentlichen um hydrophile wasserlösliche Verbindungen, wie ethoxylierte Alkylphenole oder ethoxylierte Fettalkohole. Produkte dieser Art werden beispielsweise dadurch erhalten, daß man C₈- bis C₁₂-Alkylphenole oder C₈- bis C₂₂-Fettalkohole mit Ethylenoxid umsetzt. Vorzugsweise ethoxyliert man C₁₂- bis C₁₈-Fettalkohole. Das Molverhältnis von Alkylphenol bzw. Fettalkohol zu Ethylenoxid beträgt dabei im allgemeinen 1:5 bis 1:20. Weitere geeignete Emulgatoren sind beispielsweise alkoxylierte Fettamine. Sofern Emulgatoren mit einem HLB-Wert von 10 oder darüber bei der Polymerisation eingesetzt werden, verwendet man sie beispielsweise in Mengen von 1 bis 20, vorzugsweise 2 bis 15 Gew.-%, bezogen auf die zu polymerisierenden Monomeren.

Die Polymerisation der Monomeren erfolgt in der wäßrigen Phase einer Wasser-in-Öl-Emulsion in Gegenwart von Wasser-in-Öl-Emulgatoren und ggf. Öl-in-Wasser-Emulgatoren sowie in Gegenwart von Radikale bildenden Polymerisationsinitiatoren. Die dabei erhältlichen Wasser-in-Öl-Polymeremulsionen enthalten die Polymerisate in Form von Primärteilchen mit mittleren Teilchengrößen von 0,1 bis 15 µm, vorzugsweise 0,5 bis 5 µm. Mindestens 90 % der Primärteilchen der Wasser-in-Öl-Polymeremulsion haben einen mittleren Teilchendurchmesser von < 10 µm.

Die Polymerisation der Monomeren kann gegebenenfalls in Gegenwart von Polymerisationsreglern erfolgen, um das Molgewicht der Polymerisate zu begrenzen. Geeignete Regler sind beispielsweise SH-Gruppen enthaltende Verbindungen wie Dodecylmercaptan, Thioglykol, Mercaptoethanol, Mercaptopropanol, Mercaptobutanole, Mercaptoessigsäure und Mercaptopropionsäure. Weitere geeignete Regler sind Tetrachlorkohlenstoff, Hydroxylammoniumsulfat, Ameisensäure und ihre Salze, Alkohole wie z.B. Methanol, Isopropanol oder Butylenglykol. Falls man bei der Polymerisation einen Regler einsetzt, verwendet man ihn in Mengen von 0,1 bis 5 %, bezogen auf die Monomeren.

Die wasserlöslichen Copolymerisate haben K-Werte von 150 bis 300 (bestimmt nach H. Fikentscher in 0,5 %iger wäßriger Lösung bei pH 7 und 25°C). Die K-Werte der Polymeren wurden nach H. Fikentscher, Cellulose-Chemie, Band 93, 58 bis 64 und 71 bis 74 (1932) bestimmt. Die hochmolekularen Polymerisate werden vorzugsweise als Flockungsmittel bei der Entwässerung von Klärschlämmen oder bei der Papierherstellung verwendet.

Da die Polymeren einer feinteiligen Wasser-in-Öl-Polymeremulsion, d.h. bei Teilchengrößen von höchstens 15 µm, vorzugsweise nicht durch Filtrieren oder Zentrifugieren isoliert werden können, erfolgt erfindungsgemäß eine Agglomeration der Polymerteilchen von Wasser-in-Öl-Polymeremulsionen durch azeotropes Entwässern solcher feinteiligen Emulsionen in Gegenwart von agglomerierend wirkenden Polyalkylenglykolen und von speziellen Schutzkolloiden. Die agglomerierend wirkenden Polyalkylenglykole werden in der WO-A-92/13912 beschrieben. Hierbei handelt es sich um Verbindungen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten.

Die Polyalkylenglykole bewirken während der azeotropen Entwässerung der Wasser-in-Öl-Polymeremulsionen eine Agglomeration der Primärteilchen der Wasser-in-Öl-Polymeremulsion. Nach der azeotropen Entwässerung liegen Agglomerationen von Primärteilchen vor, die gemäß Siebanalyse einen mittleren Teilchendurchmesser von 20 bis 2500, vorzugsweise 30 bis 500 µm haben. Das in den Wasser-in-Öl-Emulsionspolymerisaten enthaltene Wasser wird durch azeotrope Destillation zu mindestens 70 %, bevorzugt zu 80 bis 99 % entfernt. Geringe Mengen an Wasser, die in den Polymerisaten verbleiben, stören nicht, im Gegenteil, sie führen dazu, daß sich die agglomerierten Teilchen schneller in Wasser auflösen als vollständig getrocknete agglomerierte Teilchen. Handelsübliche Wasser-in-Öl-Polymeremulsionen, die einen Feststoffgehalt von mehr als 20 Gew.-% aufweisen, werden zweckmäßigerweise vor Beginn der azeotropen Destillation mit 10 bis 200 Gew.-%, bevorzugt mit 50 bis 150 Gew.-% eines Kohlenwasserstoffs mit einem Siedepunkt unter 150°C versetzt. Die azeotrope Entwässerung der Wasser-in-Öl-Polymeremulsion kann bei Normaldruck oder unter vermindertem Druck sowie gegebenenfalls unter erhöhtem Druck vorgenommen werden, z.B. in dem Bereich von 100 mbar bis 15 bar. Die Temperaturen werden vorzugsweise so gewählt, daß die Wasser-in-Öl-Polymeremulsionen, die entwässert werden, nach Möglichkeit nicht geschädigt werden. Üblicherweise werden die Wasser-in-Öl-Polymeremulsionen auf eine Temperatur in dem Bereich von 60 bis 170°C erhitzt.

Die als Agglomerationshilfsmittel in Betracht kommenden Polyalkylenglykole sind beispielsweise dadurch erhältlich, daß man die in Betracht kommenden Alkylenoxide, es sind dies Ethylenoxid, Propylenoxid, Butylenoxid-1,2 und Isobutylenoxid oder Tetrahydrofuran an Alkohole, Phenole, Amine oder Carbonsäuren anlagert. Die genannten Alkylenoxide und Tetrahydrofuran können entweder allein oder in Mischung polymerisiert werden. Sofern Mischungen eingesetzt werden, erhält man polymere Verbindungen, in denen die Alkylenoxid-Einheiten statistisch verteilt sind. Man kann jedoch auch die Alkylenoxide in üblicher Weise zu Blockcopolymerisaten abreagieren lassen. Homopolymerisate des Ethylenoxids werden beispielsweise erhalten, indem man Ethylenoxid an Ethylenglykol anlagert. Zur Herstellung von Homopolymerisaten des Propylenoxids lagert man an Propylenglykol-1,2, Propylenglykol-1,3 oder an Mischungen der genannten Isomeren Propylenoxid an. Die Herstellung der Homopolymerisate der anderen Alkylenoxide erfolgt in entsprechender Weise.

Blockcopolymerisate werden beispielsweise dadurch hergestellt, daß man zunächst an Ethylenglykol Ethylenoxid anlagert und abreagieren läßt und danach Propylenoxid unter den üblichen Bedingungen, d.h. durch Katalyse mit Alkalihydroxiden oder Calciumoxid, anlagert. Hier gibt es viele Möglichkeiten, um die Reihenfolge der Blöcke von Alkylenoxid-Einheiten zu variieren. Beispielsweise kann sich an einen Ethylenoxid-Block ein Propylenoxid-Block und dann ein Ethylenoxid-Block anschließen. Ebenso sind Polyalkylenglykole als Agglomerationshilfsmittel einsetzbar, die einen Ethylenoxid, einen Propylenoxid-Block und einen Butylenoxid-Block aufweisen oder Polyalkylenglykole, bei denen auf einen Propylenoxid-Block ein Ethylenoxid-Block folgt oder solche Polyalkylenoxide bei denen auf einen Butylenoxid-Block ein Propylenoxid-Block und gegebenenfalls ein Ethylenoxid-Block folgt.

Die Endgruppen der so entstehenden Polyalkylenglykole können einseitig oder auch beidseitig verschlossen sein. Einseitig verschlossene Polyalkylenglykole erhält man z.B. dadurch, daß man Alkylenoxide an Alkohole, Phenole, Amine oder Carbonsäuren anlagert. Geeignete Alkohole sind beispielsweise einwertige C₁- bis C₂₂-Alkohole, z.B. Methanol, Ethanol, n-Propanol, Isopropanol, n-Butanol, Isobutanol, n-Octanol, Isooctanol und Stearylalkohol. Als Alkohole können auch mehrwertige Alkohole eingesetzt werden, z.B. wie bereits oben erwähnt, Ethylenglykole oder Propylenglykole sowie Glycerin, Pentaerythrit und Hexandiol-1,6. Die Alkylenoxide können auch an Phenol, und substituierte Phenole, wie C₁- bis C₁₈-Alkylphenole addiert werden. Ebenso eignen sich Amine als Endgruppenverschluß, z.B. C₁- bis C₁₈-Alkyl- oder Dialkylamine sowie Diamine, vorzugsweise Ethylendiamin. Von besonderem Interesse sind hierbei handelsübliche Produkte, die beispielsweise durch nacheinander erfolgende Anlagerung von Ethylenoxid und Propylenoxid an Ethylendiamin erhältlich sind. Auch Thioalkohole, wie Mercaptoethanol, Mercaptopropanole und Mercaptobutanole, können alkoxyliert werden. Die endständigen OH-Gruppen der Polyalkylenglykole können auch beispielsweise durch Aminogruppen ersetzt sein. Ebenso eignen sich solche Polyalkylenglykole als Agglomerationshilfsmittel, deren endständige OH-Gruppen verethert oder verestert sind.

Die in Betracht kommenden Polyalkylenglykole enthalten mindestens 2 Alkylenoxid-Einheiten einpolymerisiert. Geeignete Agglomerationshilfsmittel sind beispielsweise Polyethylenglykole, Polypropylenglykole, Blockcopolymerisate aus Ethylenoxid- und Propylenoxidblöcken der Struktur EO-PO, PO-EO-PO oder EO-PO-EO, ein- oder beidseitig mit C₁- bis C₄-Alkoholen veretherte Polyethylenglykole und solche Verbindungen, die durch Anlagerung von zunächst Ethylenoxid und dann Propylenoxid oder in umgekehrter Reihenfolge an Ethylendiamin erhältlich sind. Geeignete agglomerierend wirkende Polyalkylenglykole sind z.B. Diethylenglykol, Triethylenglykol, Tetraethylenglykol, Pentamethylenglykol, Hexaethylenglykol, Heptaethylenglykol, Octaethylenglykol, Diethylenglykoldimethylether, Diethylenglykolmonomethylether, Diethylenglykoldiethylether, Diethylenglykolmonoethylether, Triethylenglykolmono- und -dimethylether, Triethylenglykolmono und -diethylether, Dialkylenglykoldibutylether, Diethylenglykolmonobutylether, Diethylenglykolmonopropylether, Diethylenglykoldipropylether, EO-PO-Blockcopolymerisate mit mittleren Molekulargewichten von 120 bis 2 Millionen, PO-EO-PO-Blockcopolymerisate mit mittleren Molekulargewichten von 178 bis 2 Millionen und EO-PO-EO-Blockcopolymerisate mit mittleren Molekulargewichten von 164 bis 2 Millionen, Polypropylenglykole mit Molekulargewichten von 134 bis 2 Millionen, Dipropylenglykoldiacetat, Diethylenglykoldiacetat, Dipropylenglykolmonoacetat, Diethylenglykolmonoacetat, Dipropylenglykoldimethylether und Dipropylenglykolmonomethylether. Die angegebenen Molekulargewichte beziehen sich auf das Zahlenmittel. Die Agglomerationshilfsmittel werden vorzugsweise in Mengen von 5 bis 20 Gew.%, bezogen auf das in der Wasser-in-Öl-Emulsion vorhandenen Polymere, eingesetzt.

Erfindungsgemäß erhält man agglomerierte Polymerteilchen mit einer engen Teilchengrößenverteilung, wenn man die oben beschriebenen Wasser-in-Öl-Polymeremulsionen in Gegenwart von agglomerierend wirkenden Polyalkylenglykolen und solchen Schutzkolloiden azeotrop entwässert, die durch radikalische Copolymerisation von
a) C₈- bis C₄₀-Monoolefinen mit
b) monoethylenisch ungesättigten C₄- bis C₆-Dicarbonsäureanhydriden
nach Art einer Substanzpolymerisation bei Temperaturen von 80 bis 300°C zu Copolymerisaten mit Molmassen von 500 bis 20.000 g/Mol erhältlich sind. Copolymerisate dieser Art sind bekannt, vgl. DE-A-3 730 885 und EP-A-0 412 389. Sie werden nach Art einer Substanzpolymerisation durch Copolymerisieren der Monomeren der Gruppe (a) mit den Monomeren der Gruppe (b) bei Temperaturen von 80 bis 300°C erhalten. Geeignete Monoolefine mit 8 bis 40 Kohlenstoffatomen sind beispielsweise n-Octen-1, 2,4,4-Trimethylpenten-1, 2,4,4-Trimethylpenten-2, Diisobuten, das technisch als Isomerengemisch aus ca. 80 Gew.-% 2,4,4-Trimethylpenten-1 und ca. 20 Gew.-% 2,4,4-Trimethylpenten-2 vorliegt, 4,4-Dimethylhexen-1, Decen-1, Dodecen-1, Tetradecen-1, Hexadecen-1, Octadecen-1, C₂₀-Olefin-1, C₂₂-Olefin-1, C₂₄-Olefin-1, C₂₀- bis C₂₄-Olefin-1, C₂₄- bis C₂₈-Olefin-1, C₃₀-Olefin-1, C₃₅-Olefin-1 und C₄₀-Olefin-1. Die Olefine bzw. Mischungen von Olefinen sind Handelsprodukte. Außer den geradkettigen Olefinen kommen auch cyclische Olefine in Betracht wie Cycloocten. Die Olefine können von der Herstellung her geringe Mengen an inerten organischen Kohlenwasserstoffen enthalten, z.B. bis zu etwa 5 Gew.-%. Die Olefine werden üblicherweise in der im Handel erhältlichen Qualität eingesetzt. Sie brauchen keiner besonderen Reinigung unterworfen zu werden. Die bevorzugt eingesetzten Olefine enthalten mindestens 12 C-Atome. Besonders bevorzugt sind C₁₆- bis C₃₀-Olefine.

Als Komponente (b) der Copolymerisate kommen monoethylenisch ungesättigte C₄- bis C₈-Dicarbonsäureanhydride in Betracht, z.B. Maleinsäureanhydrid, Itaconsäureanhydrid, Mesaconsäureanhydrid, Citraconsäureanhydrid, Methylenmalonsäureanhydrid und Mischungen dieser Anhydride. Von den genannten Anhydriden wird vorzugsweise Maleinsäureanhydrid verwendet. Die Copolymerisate enthalten 40 bis 60 mol-% Monoolefine und 60 bis 40 mol-% der in Betracht kommenden Dicarbonsäureanhydride einpolymerisiert und haben eine Molmasse von 500 bis 20.000, vorzugsweise 800 bis 10.000 g/Mol. Sie sind dadurch erhältlich, daß man die Monomeren (a) und (b) im Molverhältnis 1,1:1 bis 1:1 polymerisiert. Vorzugsweise polymerisiert man die Monomeren (a) und (b) im Molverhältnis 1:1 oder verwendet lediglich einen 1 gew.-%igen Überschuß an Monomeren der Komponente (a). Die Monomeren der Gruppen (a) und (b) bilden bekanntlich alternierende Copolymerisate, die bei hohen Molekulargewichten die Monomeren (a) und (b) zu jeweils 50 mol-% einpolymerisiert enthalten. Bei sehr niedrigen Molekulargewichten der Copolymerisate kann je nach Art der Endgruppen eine Abweichung vom molaren Verhältnis in dem oben angegebenen Rahmen vorliegen, wenn beispielsweise die Copolymerisatkette mit dem Monomeren (a) startet und auch mit dem Monomeren (a) abbricht.

Die bei der Substanzpolymerisation anfallenden Copolymerisate enthalten Anhydridgruppen und weisen Molmassen von 500 bis 20.000 g/Mol auf. Die Anhydridgruppen enthaltenden Copolymerisate werden vorzugsweise direkt bei der azeotropen Entwässerung eingesetzt. Man kann jedoch auch die Anhydridgruppen enthaltenden Copolymerisate zunächst hydrolysieren, so daß Säuregruppen enthaltende Copolymerisate vorliegen, die mit gleichem Erfolg als Schutzkolloid verwendet werden können. Außerdem ist es möglich, die Anhydridgruppen enthaltenden Copolymerisate durch Umsetzung mit Alkoholen, Alkalimetallbasen, Ammoniak oder Aminen zu modifizieren, so daß die in der EP-A-0 412 389 beschriebenen Derivate entstehen wie Ester-, Carboxylat- und Amidgruppen enthaltende Copolymerisate. Diese Derivate werden ebenfalls ausführlich in der EP-A-0 412 389 beschrieben. Bei der azeotropen Entwässerung der Wasser-in-Öl-Polymeremulsionen verwendet man, bezogen auf die Polymeren, 0,1 bis 20, vorzugsweise 1 bis 5 Gew.-% eines Schutzkolloids oder einer Mischung der erfindungsgemäß einzusetzenden Schutzkolloide. Diese Schutzkolloide haben einen entscheidenden Einfluß auf die Teilchengrößenverteilung der agglomerierten Polymerteilchen. Man erhält auf diese Weise feinteilige Pulver mit einer sehr engen Teilchengrößenverteilung, So beträgt beispielsweise der Anteil einer Teilchengröße im Pulver mindestens 48 Gew.-% und liegt vorzugsweise oberhalb von 60 Gew.-%.

Nach der azeotropen Entwässerung liegen agglomerierte Polymerteilchen in einem Kohlenwasserstofföl vor. Die Polymerteilchen können daraus leicht isoliert werden, z.B. durch Filtrieren, Abdekantieren des Kohlenwasserstofföls oder durch Zentrifugieren. Anhaftendes Kohlenwasserstofföl kann leicht aus den agglomerierten Polymerteilchen entfernt werden, z.B. durch Trocknen in einem Trockenschrank, vorzugsweise bei höheren Temperaturen und unter vermindertem Druck.

Die agglomerierten Polymerteilchen bestehen vorzugsweise aus jeweils partiell oder vollständig mit Ammoniak oder Aminen neutralisierter vernetzter Polyacrylsäure, vernetzter Polymethacrylsäure, vernetzten Copolymerisaten aus Acrylsäure und Methacrylsäure oder aus vernetzten Copolymerisaten von Acrylsäure und Acrylamid und/oder Methacrylamid mit einem Gehalt an einpolymerisiertem Acrylamid und/oder Methacrylamid von 1 bis 20 Gew.-% sowie vernetzte Copolymerisate aus Methacrylsäure und Acrylamid oder Methacrylamid mit einem Gehalt an einpolymerisierten Amiden von 1 bis 20 Gew.-%. Der Gehalt an Vernetzer in den vernetzten Copolymerisaten beträgt vorzugsweise 50 bis 2000 ppm, bezogen auf die Monomeren, wobei der bevorzugt eingesetzte Vernetzer N,N'-Methylenbisacrylamid ist. Die agglomerierten Polymerisate zerfallen beim Einbringen in ein wäßriges Medium, z.B. in eine wäßrige Polymerdispersion oder eine wäßrige Textildruckpaste rasch in die Primärteilchen. Die vernetzten Polymerisate quellen in Wasser und erhöhen dadurch die Viskosität des wäßrigen Systems. Im Fall von wasserlöslichen Polymerisaten, z.B. hochmolekularer Polyacrylsäure lösen sich die aus den agglomerierten Polymerteilchen entstehenden Primärteilchen in Wasser. Die erfindungsgemäßen agglomerierten vernetzten Polymerteilchen werden als Verdickungsmittel für Textilpigmentdruckpasten verwendet. Die Menge an Verdickungsmittel beträgt 0,5 bis 5 Gew.-%, bezogen auf die Druckpaste.

## Patentansprüche

1. Agglomerierte Polymerteilchen aus feinteiligen, wasserlöslichen oder wasserquellbaren Ammoniumcarboxylatgruppen enthaltenden Polymerisaten, die mindestens 50 Gew.-% einer monoethylenisch ungesättigten Carbonsäure einpolymerisiert enthalten, wobei die agglomerierten Teilchen einen mittleren Teilchendurchmesser von 20 bis 2500 µm haben und aus Primärteilchen mit einem mittleren Teilchendurchmesser von 0,1 bis 15 µm bestehen, die durch Polymerisieren von Monomer mischungen aus mindestens 50 Gew.-% monoethylenisch ungesättigten Carbonsäuren und gegebenenfalls anderen monoethylenisch ungesättigten Monomeren und gegebenenfalls Vernetzungsmitteln, nach Art einer Wasser-in-Öl-Polymerisation erhältlich sind und durch azeotropes Entwässern zu mindestens 70 % der die Primärteilchen enthaltenden Wasser-in-Öl-Polymeremulsion in Gegenwart von agglomerierend wirkenden Polyalkylenglykolen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten,
herstellbar sind und wobei die agglomerierten Polymerteilchen beim Eintragen in ein wäßriges System in die Primärteilchen zerfallen, dadurch gekennzeichnet, daß das azeotrope Entwässern zusätzlich in Gegenwart von 0,1 bis 20 Gew.-%, bezogen auf die Polymeren, an Schutzkolloiden durchgeführt wird, die durch radikalische Copolymerisation von
a) C₈- bis C40-Monoolefinen mit
b) monoethylenisch ungesättigten C₄- bis C₆-Dicarbonsäureanhydriden
nach Art einer Substanzpolymerisation bei Temperaturen von 80 bis 300°C zu Copolymerisaten mit Molmassen von 500 bis 20.000 g/Mol und einem Gehalt an einpolymerisierten Monoolefinen von 40 bis 60 mol-% und einem Gehalt an einpolymerisierten monoethylenisch ungesättigten Dicarbonsäuren von 60 bis 40 mol-% erhältlich sind und wobei die Anhydridgruppen enthaltenden Copolymerisate zu Säuregruppen enthaltenden Copolymerisaten hydrolysiert oder durch Umsetzung mit Alkoholen, Alkalimetallbasen, Ammoniak oder Aminen modifiziert sein können.

2. Verfahren zur Herstellung der agglomerierten Polymerteilchen nach Anspruch 1 durch azeotropes Entwässern zu mindestens 70 % von Wasser-in-Öl-Polymeremulsionen von wasserlöslichen oder wasserquellbaren Ammoniumcarboxylatgruppen enthaltenden Polymeren, die einen mittleren Teilchendurchmesser von 0,1 bis 15 µm haben, in Gegenwart von 0,1 bis 40 Gew.-%, bezogen auf die Polymeren, an agglomerierend wirkenden Polyalkylenglykolen, die
a) durch Anlagerung von C₂- bis C₄-Alkylenoxiden an Alkohole, Phenole, Amine oder Carbonsäuren erhältlich sind, und
b) mindestens zwei Alkylenoxid-Einheiten einpolymerisiert enthalten,
und Isolieren der agglomerierten Polymerteilchen, dadurch gekennzeichnet, daß das azeotrope Entwässern zusätzlich in Gegenwart von 0,1 bis 20 Gew.-%, bezogen auf die Polymeren, an Schutzkolloiden durchgeführt wird, die durch radikalische Copolymerisation von
a) C₈- bis C₄₀-Monoolefinen mit
b) monoethylenisch ungesättigten C₄- bis C₆-Dicarbonsäureanhydriden
nach Art einer Substanzpolymerisation bei Temperaturen von 80 bis 300°C zu Copolymerisaten mit Molmassen von 500 bis 20.000 g/Mol und einem Gehalt an einpolymerisierten Monoolefinen von 40 bis 60 mol-% und einem Gehalt an einpolymerisierten monoethylenisch ungesättigten Dicarbonsäuren von 60 bis 40 mol-% erhältlich sind und wobei die Anhydridgruppen enthaltenden Copolymerisate zu Säuregruppen enthaltenden Copolymerisaten hydrolysiert oder durch Umsetzung mit Alkoholen, Alkalimetallbasen, Ammoniak oder Aminen modifiziert sein können.

3. Verfahren zur Herstellung von agglomerierten Polymerteilchen nach Anspruch 2, dadurch gekennzeichnet, daß man bei der Polymerisation als wasserlösliche Monomere Acrylsäure, Methacrylsäure, Mischungen aus Acrylsäure und Methacrylsäure, und als Vernetzer Methylenbisacrylamid einsetzt, wobei die Carbonsäuren gegebenenfalls in partiell oder vollständig mit Ammoniak neutralisierter Form vorliegen.

4. Verfahren nach Anspruch 2, dadurch gekennzeichnet, daß man bei der Copolymerisation als wasserlösliche Monomere Mischungen aus Acrylsäure und Acrylamid und/oder Methacrylamid oder Mischungen aus Methacrylsäure und Acrylamid und/oder Methacrylamid und als Vernetzer Methylenbisacrylamid einsetzt.

5. Verwendung der agglomerierten Polymerteilchen nach Anspruch 1 als Verdickungsmittel für Textilpigmentdruckpasten.

## Claims

1. Agglomerated particles of finely divided, water-soluble or water-swellable polymers which contain ammonium carboxylate groups and at least 50% by weight of a monoethylenically unsaturated carboxylic acid as polymerized units, the agglomerated particles having a mean particle diameter of from 20 to 2500 µm and consisting of primary particles having a mean particle diameter of from 0.1 to 15 µm, which are obtainable by polymerization of monomer mixtures of at least 50% by weight of monoethylenically unsaturated carboxylic acids and, if required, other monoethylenically unsaturated monomers and, if required, crosslinking agents by a water-in-oil polymerization method and can be prepared by azeotropic removal of water to an extent of at least 70% from the water-in-oil polymer emulsion containing the primary particles, in the presence of polyalkylene glycols which have an agglomerating effect and which
a) are obtainable by an addition reaction of C₂-C₄-alkylene oxides with alcohols, phenols, amines or carboxylic acids and
b) contain at least two polymerized alkylene oxide units,
and the agglomerated polymer particles disintegrating into the primary particles on introduction into an aqueous system, wherein the azeotropic removal of water is additionally carried out in the presence of from 0.1 to 20% by weight, based on the polymers, of protective colloids which are obtainable by free radical copolymerization of
a) C₈-C₄₀-monoolefins with
b) monoethylenically unsaturated C₄-C₆-dicarboxylic anhydrides
by a mass polymerization method at from 80 to 300°C to give copolymers having molecular weights of from 500 to 20,000 g/mol and a content of polymerized monoolefins of from 40 to 60 mol% and a content of polymerized monoethylenically unsaturated dicarboxylic acids of from 60 to 40 mol%, it being possible for the copolymers containing anhydride groups to be hydrolyzed to give copolymers containing acid groups or to be modified by reaction with alcohols, alkali metal bases, ammonia or amines.

2. A process for the preparation of agglomerated polymer particles as claimed in claim 1 by azeotropic removal of water to an extent of at least 70% from water-in-oil emulsions of water-soluble or water-swellable polymers which contain ammonium carboxylate groups and have a mean particle diameter of from 0.1 to 15 µm, in the presence of from 0.1 to 40% by weight, based on the polymers, of polyalkylene glycols which have an agglomerating effect and which
a) are obtainable by an addition reaction of C₂-C₄-alkylene oxides with alcohols, phenols, amines or carboxylic acids and
b) contain at least two polymerized alkylene oxide units,
and isolation of the agglomerated polymer particles, wherein the azeotropic removal of water is additionally carried out in the presence of from 0.1 to 20% by weight, based on the polymers, of protective colloids which are obtainable by free radical copolymerization of
a) C₈-C₄₀-monoolefins with
b) monoethylenically unsaturated C₄-C₆-dicarboxylic anhydrides
by a mass polymerization method at from 80 to 300°C to give copolymers having molecular weights of from 500 to 20,000 g/mol and a content of polymerized monoolefins of from 40 to 60 mol% and a content of polymerized monoethylenically unsaturated dicarboxylic acids of from 60 to 40 mol%, it being possible for the copolymers containing anhydride groups to be hydrolyzed to give copolymers containing acid groups or to be modified by reaction with alcohols, alkali metal bases, ammonia or amines.

3. A process for the preparation of agglomerated polymer particles as claimed in claim 2, wherein, in the polymerization, acrylic acid, methacrylic acid or a mixture of acrylic acid and methacrylic acid is used as the water-soluble monomers and methylenebisacrylamide is used as the crosslinking agent, and the carboxylic acids may be present in a form partially or completely neutralized with ammonia.

4. A process as claimed in claim 2, wherein, in the copolymerization, a mixture of acrylic acid and acrylamide and/or methacrylamide or a mixture of methacrylic acid and acrylamide and/or methacrylamide is used as the water-soluble monomers and methylenebisacrylamide is used as the crosslinking agent.

5. The use of the agglomerated polymer particles as claimed in claim 1 as thickeners for textile pigment print pastes.

## Revendications

1. Particules de polymère agglomérées formées de polymères solubles dans l'eau ou pouvant gonfler dans l'eau et contenant des groupements carboxylate d'ammonium, qui contiennent en liaison polymère au moins 50% en poids d'un acide carboxylique à insaturation monoéthylénique, les particules agglomérées ayant un diamètre moyen de particules de 200-2500µm et formées de particules primaires ayant un diamètre moyen de particules de 0,1-15µm, pouvant être obtenues par polymérisation de mélanges de monomères constitués d'au moins 50% en poids d'acides carboxyliques à insaturation monoéthylénique et éventuellement d'autres monomères à insaturation monoéthylénique et éventuellement d'agents de réticulation, selon le procédé de polymérisation eau-dans-huile, et pouvant être préparées par séchage azéotrope jusqu'à au moins 70% de l'émulsion eau-dans-huile de polymères contenant les particules primaires, en présence de polyalkylèneglycols à action agglomérante qui peuvent être obtenus par
a) addition d'oxydes d'alkylène en C₂-C₄ sur des alcools, des phénols, des amines ou des acides carboxyliques, et
b) qui contiennent au moins deux motifs oxyde d'alkylène en liaison polymère,
et où les particules polymères agglomérées se décomposent en les particules primaires par introduction dans un système aqueux, caractérisées en ce que le séchage azéotrope est mené en outre en présence de 0,1-20% en poids, par rapport aux polymères, de colloïdes protecteurs, pouvant être obtenus par copolymérisation radicalaire de
a) monooléfines en C₈-C₄₀ avec
b) des anhydrides d'acides dicarboxyliques en C₄-C₆ à insaturation monoéthylénique
selon le procédé de polymérisation en masse à des températures de 80-300°C, pour donner des copolymères ayant des masses molaires de 500-20000 g/mole et une teneur en monooléfines en liaison polymère de 40-60% en moles et une teneur en acides dicarboxyliques à insaturation monoéthylénique en liaison polymère de 40-60% en moles et où les copolymères contenant des groupements anhydride sont hydrolysés en copolymères contenant des groupements acide ou peuvent être modifiés par réaction avec des alcools, des bases de métaux alcalins, de l'ammoniaque ou des amines.

2. Procédé de préparation de particules polymères agglomérées selon la revendication 1 par séchage azéotrope jusqu'à au moins 70% d'émulsions eau-dans-huile de polymères solubles dans l'eau ou pouvant gonfler dans l'eau et contenant des groupements carboxylate d'ammonium, ayant un diamètre moyen de particules de 0,1-15µm, en présence de 0,1-40% en poids, par rapport aux polymères, de polyalkylèneglycols à action agglomérante qui peuvent être obtenus par
a) addition d'oxydes d'alkylène en C₂-C₄ sur des alcools, des phénols, des amines ou des acides carboxyliques, et
b) qui contiennent au moins deux motifs oxyde d'alkylène en liaison polymère,
et isolement des particules polymères agglomérées caractérisé en ce que le séchage azéotrope est mené en outre en présence de 0,1-20% en poids, par rapport aux polymères, de colloïdes protecteurs, pouvant être obtenus par copolymérisation radicalaire de
a) monooléfines en C₈-C₄₀ avec
b) des anhydrides d'acides dicarboxyliques en C₄-C₆ à insaturation monoéthylénique
selon le procédé de polymérisation en masse à des températures de 80-300°C, pour donner des copolymères ayant des masses molaires de 500-20000 g/mole et une teneur en monooléfines en liaison polymère de 40-60% en moles et une teneur en acides dicarboxyliques à insaturation monoéthylénique en liaison polymère de 40-60% en moles et où les copolymères contenant des groupements anhydride sont hydrolysés en copolymères contenant des groupements acide ou peuvent être modifiés par réaction avec des alcools, des bases de métaux alcalins, de l'ammoniaque ou des amines.

3. Procédé de préparation de particules polymères agglomérées selon la revendication 2, caractérisé en ce que l'on utilise comme monomères solubles dans l'eau, lors de la polymérisation, de l'acide acrylique, de l'acide méthacrylique, des mélanges d'acide acrylique et d'acide méthacrylique, et du méthylènebisacrylamide en tant qu'agent réticulant, les acides carboxyliques se trouvant éventuellement sous forme neutralisée de façon partielle ou totale avec de l'ammoniaque.

4. Procédé selon la revendication 2, caractérisé en ce que l'on utilise comme monomères solubles dans l'eau, lors de la copolymérisation, des mélanges d'acide acrylique et d'acrylamide et/ou de méthacrylamide ou des mélanges d'acide méthacrylique et d'acrylamide et/ou de méthacrylamide ainsi que du méthylènebisacrylamide en tant qu'agent réticulant.

5. Utilisation des particules polymères selon la revendication 1 en tant qu'agent épaississant pour pâtes d'impression de pigments pour textiles.
